# EUROPÄISCHE PATENTSCHRIFT

(11) **EP 2 079 560 B1**
(45) Veröffentlichungstag und Bekanntmachung des Hinweises auf die Patenterteilung: **26.05.2010**
(21) Anmeldenummer: 07803300.8
(22) Anmeldetag: 06.09.2007
(51) Int. Cl.: B24D 9/08

(54) **SCHLEIFVORRICHTUNG MIT LÖSBAR VERBUNDENEM SCHLEIFELEMENT**
GRINDING DEVICE WITH DETACHABLY MOUNTED GRINDING ELEMENT
DISPOSITIF DE MEULAGE PRESENTANT UN ELEMENT DE MEULE A LIAISON AMOVIBLE

(30) Priorität: 05.10.2006 DE 102006047139
(43) Veröffentlichungstag der Anmeldung: 22.07.2009
(73) Patentinhaber: Robert Bosch GmbH, 70442 Stuttgart (DE)
(72) Erfinder: HUSER, Werner, 70771 Leinfelden-Echterdingen (DE)
(86) Internationale Anmeldenummer: PCT/EP2007/059346
(87) Internationale Veröffentlichungsnummer: WO 2008/040612

(56) Entgegenhaltungen:
- WO-A-01/58302
- WO-A-95/19242
- US-A- 3 266 113

## Beschreibung

### Stand der Technik

Die Erfindung betrifft eine Schleifvorrichtung mit einem Aufnahmekörper, der mit einem Schleifelement lösbar verbunden ist, wobei die lösbare Verbindung dadurch gebildet ist, dass der Aufnahmekörper eine erste Haftanordnung und das Schleifelement eine zweite Haftanordnung aufweist und die Haftanordnungen in der Art eines Klettverschlusses miteinander korrespondieren.

In der Schleiftechnik sind verschiedene Schleifvorrichtungen bekannt, die auswechselbare Schleifelemente, insbesondere Schleifblätter verwenden, so z.B. bei Handwerkzeuge wie dem Deltaschleifer, dem Schwingschleifer oder dem Externschleifer. Für den unkomplizierten und schnellen Wechsel der schnell verbrauchten Schleifblätter gegen Schleifblätter mit neuem Schleifmaterial kommen einerseits an der Oberseite des Aufnahmekörpers, die beispielsweise von einem Schleifteller gebildet ist, und andererseits an der Unterseite des Schleifblattes paarweise angeordnete Haftpartner in der Art eines flächigen Klettverschlusses zum Einsatz, welche eine leicht lösbare Verbindung realisieren. Das Haftflächenpaar des aus dem Stand der Technik bekannten Klettverschlusses, hat verschiedenartig gestaltete Oberflächenstrukturen. Eine der beiden Haftflächen besteht aus einem Material mit einer Vielzahl kleiner Häkchen, analog einer Klette, wobei die Gegenhaftfläche aus wolligem Material mit einer Vielzahl kleiner Schlaufen ausgebildet ist. In Verwendung des Haftflächenpaares an der Schleifvorrichtung, ist die Haftfläche mit dem weichen Schlaufenmaterial vorzugsweise auf der Unterseite des Schleifblattes angeordnet, wogegen die etwas steifere Haftfläche mit den Häkchen meist dem Aufnahmekörper zugeordnet ist. Beim Zusammendrücken der Haftflächen verhaken sich, quasi mikromechanisch, die kleinen Häkchen der einen Haftfläche mit den Schlaufen der Gegenhaftfläche, woraus sich die Haftkraft des Klettverschlusses ergibt. Je nach Art der Materialien der Haftflächen und nach Anzahl der Häkchen und Schlaufen entsteht eine verschiedengradig haftende, aber dennoch lösbare Verbindung. Unter mehr oder weniger großer Kraftanwendung und mit entsprechend charakteristischem Trenngeräusch lassen sich die Haftflächen des Klettverschlusses wieder voneinander lösen.

Diese bekannten Klettverschlüsse (siehe z.B. WO-A- 95/19242) haben den Nachteil, dass sie mit häufiger Benutzung relativ schnell verschleißen. Das Herausreißen der Häkchen aus den Schlaufen beim Trennen der Verbindung führt kurzfristig dazu, dass die kleinen Häkchen verfilzen und die Schlaufen beschädigt werden und sich öffnen. Anfallende Schleifpartikel können zusätzlich zur Verschmutzung der Haftflächen beitragen. Das hat zur Folge, dass der Verschluss seine ursprüngliche Haftkraft verliert und immer schlechter schließt. Dies betrifft umso mehr den bei der Schleifvorrichtung häufiger wiederverwendeten Haftpartner am Aufnahmekörper. Ein Austausch dieser meist mit dem Schleifteller des Aufnahmekörpers fest verklebten Haftfläche, ist nur unter hohen Reparaturaufwendungen möglich.

Außerdem verlangt der Klettverschluss auf Grund der differenzierten Oberflächenstrukturen der beiden Haftpartner verschiedenartige Materialien und Herstellungsprozesse, die die Produktion insgesamt aufwendig und teuer gestalten.

Nicht zuletzt wird das beim Trennen des Klettverschlusses entstehende laute Geräusch häufig als störend empfunden.

Damit erweist sich der herkömmliche Klettverschluss insbesondere in seiner Anwendung für Schleifvorrichtungen mit häufig zu wechselnde Verbrauchsmaterialien, wie Schleifblätter technisch und ökonomisch als verbesserungswürdig.

Der Erfindung liegt daher die Aufgabe zugrunde, die Qualität und Effizienz der lösbaren Verbindung zum Austausch des Schleifelementes der gattungsgemäßen Schleifvorrichtung zu verbessern.

### Offenbarung der Erfindung

Die Aufgabe wird dadurch gelöst, dass bei der lösbaren Verbindung zwischen dem Aufnahmekörper und dem Schleifelement sowohl die erste Haftanordnung als auch die zweite Haftanordnung eine Vielzahl von Vorsprüngen mit jeweils einer zum freien Ende des Vorsprunges hin zunehmenden Querschnittserweiterung aufweist

Bei dieser Art der Oberflächenstruktur beider Haftanordnungen greifen bei deren Zusammenfügung die Vorsprünge gegensinnig ineinander und bilden einen Hinterschluss. Dabei ermöglicht die z.B. tropfen- oder keulenförmige Haftstruktur nicht nur ein lautloses Öffnen und Schließen des Verschlusses, sondern erzeugt auch keine Zerreiß- und Verfilzungserscheinungen der Haftanordnungen. Anfallender Schmutz, wie Schleifstaub, kann gut in die Zwischenräume zwischen den Vorsprüngen verdrängt werden und behindert den Formschluss nicht. Somit ist die erfindungsgemäße lösbare Verbindung mit diesem Verschluss sehr verschleißarm und auch bei intensiver Benutzung noch gut und fest schließend. Der neuartige Verschluss kann aufgrund der Formgebung der Vorsprünge hohe Scherkräfte aufnehmen und ist dennoch leicht zu lösen. Zudem haben beide Haftanordnungen die gleiche Oberflächenstruktur, so dass sich die Herstellung des Verschlusses stark vereinfacht und kostengünstiger wird.

Insgesamt ist eine solche lösbare Verbindung komfortabler, leistungsfähiger und mit geringerem Aufwand herzustellen als herkömmliche Klettverschlüsse. Deshalb bietet diese lösbare Verbindung eine gute Einsatzmöglichkeit bei einer Schleifvorrichtung mit auswechselbaren Schleifelementen.

Mit den in den Unteransprüchen aufgeführten Maßnahmen werden vorteilhafte Weiterbildungen und Verbesserungen der im Anspruch 1 angegebenen erfindungsgemäßen Schleifvorrichtung erreicht.

Besonders gute Haftergebnisse werden erreicht, wenn z.B. die Form und/ oder der Abstand der Vorsprünge zueinander innerhalb einer Oberflächenstruktur einer Haftanordnung nicht beliebig ausgebildet ist, sondern übereinstimmend und gleichmäßig gestaltet ist. Die Haftqualität erhöht sich umso mehr, wenn diese Gestaltungsfaktoren der Vorsprünge übereinstimmend an beiden Haftanordnungen vorzufinden sind. Außerdem werden bei vollkommen identischen Haftstrukturen und gleichen Materialien beider Haftanordnungen die Produktionsaufwendungen für die Herstellung des Verschlusses auf ein Minimum reduziert, da die Produktion zweier verschiedener Haftpartner gänzlich hinfällig wird.

Natürlich können die Vorsprünge auch in ihrer Größe, ihrer Form, in ihren Abständen zueinander und/oder in ihren Materialien variiert werden, sofern stets der lösbare Hintergriff gewährleistet wird. Dadurch lassen sich die Hafteigenschaften der Haftanordnungen sehr präzise auf die verschiedensten Einsatz- und Belastungsfälle der lösbaren Verbindung an vielfältigen Schleifvorrichtungen einstellen.

In einer weiteren vorteilhaften Ausführungsform ist die erste Haftanordnung lösbar mit dem Aufnahmekörper verbunden. Damit ist die dem Aufnahmekörper zugeordnete erste Haftanordnung nicht mit diesem fest verklebt, sondern lösbar verbunden. So kann die beim ständigen Wechsel der Schleifelemente am häufigsten mechanisch belastete Haftanordnung leicht ausgetauscht werden.

Eine vorteilhafte Ausführungsform besteht auch darin, dass der Aufnahmekörper einen Schleifteller aufweist, an dem die erste Haftanordnung ausgebildet ist. Der Schleifteller dient der Dämpfung der beim Schleifen auftretenden mechanischen Belastungen, insbesondere der Vibrationen, die vom Bearbeitungsobjekt auf die Schleifvorrichtung übertragen werden, und besteht daher meist aus Hartgummi oder ähnlichem elastischen Material. Dieses Material geeignet sich gleichzeitig für die Ausbildung der Vorsprünge der Haftanordnung, da eine Elastizität der Vorsprünge der erfindungsgemäßen lösbaren Verbindung zwischen den Haftanordnungen eine höhere Leichtgängigkeit beim Schließen und Öffnen vermittelt. Somit ist es günstig die erste Haftanordnung und den Schleifteller aus einheitlichem Material herzustellen, wobei weitergehend die Fertigung aus einem einzigen Teil zusätzlich technologische Vorteile birgt.

Ist der Schleifteller lösbar mit einem Grundkörper des Aufnahmekörpers verbunden, kann auch der Schleifteller, der durch die Schleifarbeiten insbesondere an seinen Randzonen einem gewissen Verschleiß unterliegt, leicht ausgetauscht werden. Für spezielle Anwendungsfälle können so auch Schleifteller mit verschiedenem Elastizitätsgrad eingesetzt werden.

Ist des Weiteren die lösbare Verbindung des Schleiftellers mit dem Grundkörper dadurch gebildet, dass der Grundkörper eine dritte Haftanordnung gemäß der ersten Haftanordnung und der Schleifteller eine vierte Haftanordnung gemäß der zweiten Haftanordnung aufweist, kann die erfindungsgemäße lösbare Verbindung auch zur Befestigung des Schleiftellers am Grundkörper verwendet werden. Da der Formschluss des erfindungsgemäßen Verschlusses gute Haltekräfte erzeugt, eignet sich diese Verbindungsart auch an einer Stelle der Schleifvorrichtung, an der die Anforderungen an die Haltekraft, z.B. infolge höherer Hebelkräfte, zunehmen.

### Kurze Beschreibung der Zeichnungen

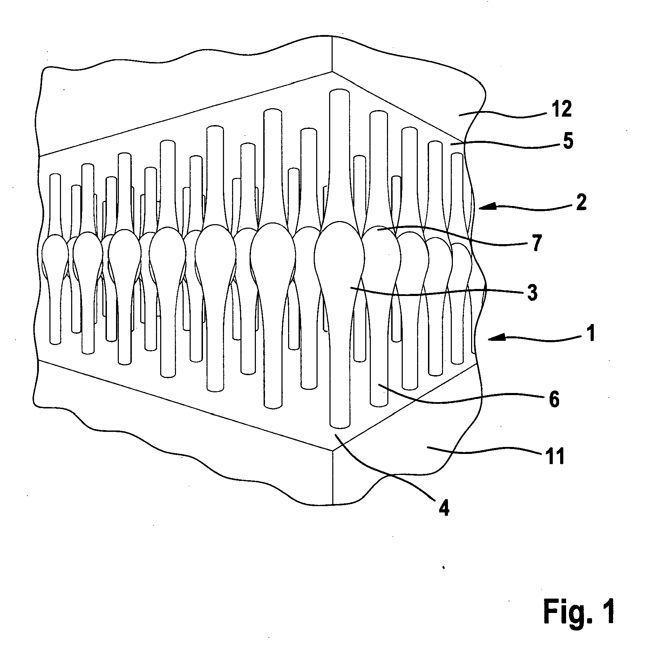

Eine Schleifvorrichtung mit der erfindungsgemäßen lösbaren Verbindung zwischen einem Aufnahmekörper und einem Schleifelement wird nachfolgend an einem Ausführungsbeispiel näher erläutert. Die zugehörige Zeichnung zeigt in Fig. 1 eine schematische, stark vergrößerte Darstellung der lösbaren Verbindung zwischen einem Aufnahmekörper und einem Schleifelement.

### Ausführungsform(en) der Erfindung

In Fig. 1 ist in einem stark vergrößerten Ausschnitt die Oberflächenstruktur der ineinander greifenden Haftanordnungen des Aufnahmekörpers und des Schleifelementes ersichtlich. Hierbei befindet sich eine erste Haftanordnung 1, die mit der Oberseite eines Aufnahmekörpers 11 der Schleifvorrichtung (angedeutet dargestellt) verbunden ist, in Eingriff mit einer zweiten Haftanordnung 2, die auf der Rückseite des auswechselbaren Schleifelementes 12, beispielsweise einem Schleifblatt (angedeutet dargestellt), angeordnet ist. Die erste Haftanordnung 1 wie auch die zweite Haftanordnung 2 weisen eine Vielzahl gleichförmiger und gleichgroßer Vorsprünge 3 auf, die in einem gleichmäßigen Abstand zueinander aus der Basis 4, 5 der Haftanordnungen 1,2 hervortreten. Die Vorsprünge 3 sind keulenartig geformt, wobei sich der Querschnitt jedes Vorsprunges 3 von seinem Schaft 6 zu seinem freien Ende 7 hin im Wesentlichen stetig erweitert. Die Vorsprünge 3 sind nur wenige Zehntel Millimeter groß. Beim Zusammenfügen der ersten 1 und zweiten Haftanordnung 2 schieben sich die Vorsprünge 3 gegensinnig ineinander und umschließen sich gegenseitig. Beim Zusammenfügen der Haftanordnungen 1 und 2 dringt jeweils ein Vorsprung der einen Anordnung zwischen Vorsprünge der anderen Anordnung und umgekehrt, wobei die freien Endbereiche der Vorsprünge 3 Auflaufschrägen bilden und insofern das Zusammenfügen erleichtern. Im Zuge des weiteren Zusammenfügens liegen die Vorsprünge der beiden Haftanordnungen 1 und 2 seitlich aneinander. Werden die Haftanordnungen noch weiter zusammengefügt, so hintergreifen sich die Vorsprünge 3 der beiden Haftanordnungen 1 und 2, da sich jeweils an den durchmessergrößten Bereich ein durchmesserkleinerer Bereich aufgrund der Keulenform anschließt. Demgemäß sorgt die querschnittserweiternde Kopfform der Vorsprünge 3 für ein leichtes Ineinanderfügen der Vorsprünge 3 und die sich an den größten Durchmesser jeweils anschließende querschnittsabnehmende Form sorgt für den nötigen Hinterschluss der Verbindung. Diese Art der dreidimensionalen Gestaltung beider Haftanordnungen 1,2 verfügt über die vorbeschriebenen vorteilhaften Eigenschaften, die die lösbare Verbindung zwischen dem Aufnahmekörper 11 und dem Schleifelement 12 der Schleifvorrichtung qualitativ verbessern.

## Patentansprüche

1. Schleifvorrichtung mit einem Aufnahmekörper, der mit einem Schleifelement lösbar verbunden ist, wobei die lösbare Verbindung **dadurch** gebildet ist, dass der Aufnahmekörper eine erste Haftanordnung und das Schleifelement eine zweite Haftanordnung aufweist und die Haftanordnungen in der Art eines Klettverschlusses miteinander korrespondieren, **dadurch gekennzeichnet, dass** sowohl die erste Haftanordnung (1) als auch die zweite Haftanordnung (2) eine Vielzahl von Vorsprüngen (3) mit jeweils einer zum freien Ende (7) des Vorsprunges (3) hin zunehmenden Querschnittserweiterung aufweist.

2. Schleifvorrichtung nach Anspruch 1, **dadurch gekennzeichnet, dass**, die Vorsprünge (3) der ersten Haftanordnung (1) und/oder der zweiten Haftanordnung (2) zumindest teilweise elastisch ausgebildet sind.

3. Schleifvorrichtung nach einem der vorhergehenden Ansprüche, **dadurch gekennzeichnet, dass** die Vorsprünge (3) der ersten Haftanordnung (1) und/oder die Vorsprünge (3) der zweiten Haftanordnung (2) untereinander identisch sind.

4. Schleifvorrichtung nach einem der vorhergehenden Ansprüche, **dadurch gekennzeichnet, dass** die Vorsprünge (3) der ersten Haftanordnung (1) mit den Vorsprünge (3) der zweiten Haftanordnung (2) identisch sind.

5. Schleifvorrichtung nach einem der vorhergehenden Ansprüche, **dadurch gekennzeichnet, dass** die Vorsprünge (3) der ersten Haftanordnung (1) und/oder die Vorsprünge (3) der zweiten Haftanordnung (2) zueinander gleichmäßig beabstandet sind.

6. Schleifvorrichtung nach einem der vorhergehenden Ansprüche, **dadurch gekennzeichnet, dass** die Vorsprünge (3) der ersten Haftanordnung (1) den gleichen Abstand zueinander aufweisen wie der Abstand der Vorsprünge (3) der zweiten Haftanordnung (2) zueinander.

7. Schleifvorrichtung nach einem der vorhergehenden Ansprüche, **dadurch gekennzeichnet, dass** die erste Haftanordnung (1) und die zweite Haftanordnung (2) aus gleichem Material bestehen.

8. Schleifvorrichtung nach einem der vorhergehenden Ansprüche, **dadurch gekennzeichnet, dass** die erste Haftanordnung (1) lösbar mit dem Aufnahmekörper (11) verbunden ist.

9. Schleifvorrichtung nach einem der vorhergehenden Ansprüche, **dadurch gekennzeichnet, dass** der Aufnahmekörper (11) einen Schleifteller aufweist, an dem die erste Haftanordnung (1) ausgebildet ist.

10. Schleifvorrichtung nach einem der vorhergehenden Ansprüche, **dadurch gekennzeichnet, dass** der Schleifteller lösbar mit einem Grundkörper des Aufnahmekörpers (11) verbunden ist.

11. Schleifvorrichtung nach einem der vorhergehenden Ansprüche, **dadurch gekennzeichnet, dass** die lösbare Verbindung des Schleiftellers mit dem Grundkörper **dadurch** gebildet ist, dass der Grundkörper eine dritte Haftanordnung gemäß der ersten Haftanordnung (1) und der Schleifteller eine vierte Haftanordnung gemäß der zweiten Haftanordnung (2) aufweist.

## Claims

1. Sanding device comprising a mounting body which is detachably connected to a sanding element, the detachable connection being formed owing to the fact that the mounting body has a first adhering arrangement and the sanding element has a second adhering arrangement and the adhering arrangements correspond to one another like a hook-and-loop fastener, **characterized in that** both the first adhering arrangement (1) and the second adhering arrangement (2) have a multiplicity of projections (3), each with a cross-sectional widening which increases towards the free end (7) of the projection (3).

2. Sanding device according to Claim 1, **characterized in that** the projections (3) of the first adhering arrangement (1) and/or of the second adhering arrangement (2) are designed to be at least partly elastic.

3. Sanding device according to either of the preceding claims, **characterized in that** the projections (3) of the first adhering arrangement (1) and/or the projections (3) of the second adhering arrangement (2) are identical to one another.

4. Sanding device according to one of the preceding claims, **characterized in that** the projections (3) of the first adhering arrangement (1) are identical to the projections (3) of the second adhering arrangement (2).

5. Sanding device according to one of the preceding claims, **characterized in that** the projections (3) of the first adhering arrangement (1) and/or the projections (3) of the second adhering arrangement (2) are at a uniform distance from one another.

6. Sanding device according to one of the preceding claims, **characterized in that** the distance between the projections (3) of the first adhering arrangement (1) is the same as the distance between the projections (3) of the second adhering arrangement (2).

7. Sanding device according to one of the preceding claims, **characterized in that** the first adhering arrangement (1) and the second adhering arrangement (2) are made of the same material.

8. Sanding device according to one of the preceding claims, **characterized in that** the first adhering arrangement (1) is detachably connected to the mounting body (11).

9. Sanding device according to one of the preceding claims, **characterized in that** the mounting body (11) has a sanding disc, on which the first adhering arrangement (1) is formed.

10. Sanding device according to one of the preceding claims, **characterized in that** the sanding disc is detachably connected to a parent body of the mounting body (11).

11. Sanding device according to one of the preceding claims, **characterized in that** the detachable connection between the sanding disc and the parent body is formed by the parent body having a third adhering arrangement according to the first adhering arrangement (1) and by the sanding disc having a fourth adhering arrangement according to the second adhering arrangement (2).

## Revendications

1. Dispositif de meulage comprenant un corps de réception, qui est connecté de manière amovible à un élément de meulage, la connexion amovible étant réalisée en ce que le corps de réception présente un premier agencement d'adhésion et l'élément de meulage présente un deuxième agencement d'adhésion, et en ce que les agencements d'adhésion se correspondent l'un à l'autre à la manière d'une fermeture de type velcro, **caractérisé en ce que** le premier agencement d'adhésion (1) ainsi que le deuxième agencement d'adhésion (2) présentent une pluralité de saillies (3) ayant à chaque fois un élargissement de section transversale augmentant vers l'extrémité libre (7) de la saillie (3).

2. Dispositif de meulage selon la revendication 1, **caractérisé en ce que** les saillies (3) du premier agencement d'adhésion (1) et/ou du deuxième agencement d'adhésion (2) sont réalisées de manière au moins en partie élastique.

3. Dispositif de meulage selon l'une quelconque des revendications précédentes, **caractérisé en ce que** les saillies (3) du premier agencement d'adhésion (1) et/ou les saillies (3) du deuxième agencement d'adhésion (2) sont identiques les unes aux autres.

4. Dispositif de meulage selon l'une quelconque des revendications précédentes, **caractérisé en ce que** les saillies (3) du premier agencement d'adhésion (1) sont identiques aux saillies (3) du deuxième agencement d'adhésion (2).

5. Dispositif de meulage selon l'une quelconque des revendications précédentes, **caractérisé en ce que** les saillies (3) du premier agencement d'adhésion (1) et/ou les saillies (3) du deuxième agencement d'adhésion (2) sont équidistantes les unes des autres.

6. Dispositif de meulage selon l'une quelconque des revendications précédentes, **caractérisé en ce que** les saillies (3) du premier agencement d'adhésion (1) sont espacées les unes des autres de la même distance que la distance mutuelle entre les saillies (3) du deuxième agencement d'adhésion (2).

7. Dispositif de meulage selon l'une quelconque des revendications précédentes, **caractérisé en ce que** le premier agencement d'adhésion (1) et le deuxième agencement d'adhésion (2) se composent du même matériau.

8. Dispositif de meulage selon l'une quelconque des revendications précédentes, **caractérisé en ce que** le premier agencement d'adhésion (1) est connecté de manière amovible au corps de réception (11).

9. Dispositif de meulage selon l'une quelconque des revendications précédentes, **caractérisé en ce que** le corps de réception (11) présente un disque de meulage sur lequel est réalisé le premier agencement d'adhésion (1).

10. Dispositif de meulage selon l'une quelconque des revendications précédentes, **caractérisé en ce que** le disque de meulage est connecté de manière amovible à un corps de base du corps de réception (11).

11. Dispositif de meulage selon l'une quelconque des revendications précédentes, **caractérisé en ce que** la connexion amovible du disque de meulage au corps de base est réalisée **en ce que** le corps de base présente un troisième agencement d'adhésion comme le premier agencement d'adhésion (1) et le disque de meulage présente un quatrième agencement d'adhésion comme le deuxième agencement d'adhésion (2).
